# EUROPEAN PATENT SPECIFICATION

(11) **EP 2 215 136 B1**
(45) Date of publication and mention of the grant of the patent: **20.06.2012**
(21) Application number: 08847664.3
(22) Date of filing: 27.10.2008
(51) Int. Cl.: C08F 283/01, C08G 63/676, C09D 167/07

(54) **STYRENE-FREE UNSATURATED POLYESTER RESIN COMPOSITION**
STYROLFREIE UNGESÄTTIGTE POLYESTER ENTHALTENDE HARZZUSAMMENSETZUNG
COMPOSITION DE RÉSINE DE POLYESTER INSATURÉ EXEMPTE DE STYRÈNE

(30) Priority: 08.11.2007 EP 07380309
(43) Date of publication of application: 11.08.2010
(73) Proprietor: Arkema Coatings Resins S.A.U., 28036 Madrid (ES)
(72) Inventor: ALBALAT PEREZ, Jordi, E-08032 Barcelona (ES); GARCIA, José, Antonio, E-08228 Terrassa (ES)
(74) Representative: Killis, Andréas
(86) International application number: PCT/EP2008/009053
(87) International publication number: WO 2009/059706

(56) References cited:
- EP-A- 0 790 267
- BE-A1- 888 519
- US-A- 5 470 897
- US-A1- 2003 059 555

## Description

The present invention relates to unsaturated polyester resin compositions for curable coating or moulding compositions. The invention specifically relates to resin compositions, and more particularly to low molecular weight resin compositions, with low styrene quantity or even styrene-free, useful for preparing protective, decorative, surface treatment coatings, in particular for wood and derivatives, imitating wood materials, metal or plastic substrates.

The resin compositions based on unsaturated polyester resins used for radiation (by free radical mechanism or by radiation and/or peroxide mechanism) curable coatings generally contain styrene as a copolymerizable monomer. Styrene and other volatile organic compounds (VOC) evaporate during the film drying, resulting in costly purification of the air and excessively long drying time. Systems containing styrene frequently contain paraffin as drying accelerator in order to prevent disruptive influence of atmospheric oxygen.

US 5,095,066 describes unsaturated polyester which does not contain styrene and to which paraffin is added. After curing, the resultant films have a poor polishability and a surface with a poor flow-out. Moreover, the drying times of these systems are very long.

US 5,068,125 and US 5,470,897 also disclose unsaturated polyester resins which do not contain styrene. However, the coating compositions resulting from these resins do not present a satisfactory compromise in terms of flexibility, cold crack resistance and gloss, for high film thickness.

None of these prior art documents does provide a satisfactory solution to the problem of the protection of wood and derivatives, imitating wood materials, metal or plastic substrates, particularly for automobile interior body part, comprising an excellent compromise in terms of high flexibility, high mechanical performances and high gloss.

The present invention overcomes the disadvantages of the compositions of the prior art. The specific resin compositions of the present invention are particularly suitable for the preparation of coating compositions for wood and derivatives, imitating wood materials, metal or plastic or composite substrates, but also for moulding compositions or gel coat compositions, which satisfactorily meet the following needs and requirement:
- a low molecular weight resin composition for environmentally friendly coating compositions, with low VOC, the said resin composition which may be free of styrene,
- a relatively low viscosity, without sagging during the application,
- a high reactivity, with a high gloss and a high mechanical behaviour in terms of a compromise between high flexibility/high hardness/high gloss for the resulting coating,
- an excellent cold crack resistance, in such a way that, particularly for the obtained films, a resistance of at least 30 cycles of cold-check test is achieved, even with a highly thick film,
- a really sandable and polishable protective coating, and
- an absence of tack after cure, which means a high reactivity at the coating surface for the curable coating composition.

It is an object of the present invention to provide specific resin compositions which are particularly suitable for use in curable coating or moulding compositions.

The invention does also relate to a process for curing the said coating or moulding composition comprising the said resin composition, and to coatings, moulded articles, composites or laminates resulting from this curing.

Another object of the invention relates to a process for applying the coating composition of the invention to a substrate.

Finally, the invention concerns coated substrates and automobile interior body parts coated by a coating composition as defined according to the invention.

Thus, the first subject-matter of the present invention is a resin composition, and more particularly a styrene-free resin composition, comprising :
a) at least one α,β-ethylenically unsaturated polyester, liquid at room temperature, and
b) at least one comonomeric component comprising :
   b1) at least one comonomer selected from (meth)acrylates of cycloaliphatic alcohols, and
   b2) optionally, at least one comonomer different from b1)
with the weight content of the said comonomer b) with respect to the total weight of a) + b) ranging from 0,5 to 45%, preferably from 5 to 40%, and more preferably from 5 to 25%.

Concerning the said (meth)acrylate of cycloaliphatic alcohol, it may comprise a cycloaliphatic structure selected from isobornyl, dicyclopentadienyl or cyclohexyl. More preferably, the said (meth)acrylate of cycloaliphatic alcohol is isobomyl acrylate and/or isobornyl methacrylate.

Preferably, the said resin composition may consist only of :
a) at least one α,β-ethylenically unsaturated polyester, liquid at room temperature, and
b) at least one comonomeric component comprising :
   b1) at least one comonomer selected from (meth)acrylates of cycloaliphatic alcohol, and
   b2) optionally, at least one comonomer different from b1)
with the weight content of the said comonomer b) with respect to the total weight of a) + b) ranging from 0,5 to 45%, preferably from 5 to 40%, and more preferably from 5 to 25%.

"Liquid at room temperature" means for the said polyester a), that at 25°C, it is a viscous polymer with a bulk viscosity ranging from 15000 to 40000 mPa.s. More particularly the Tg of the said polyester, as measured by DSC method, is lower than 10°C preferably lower than 0°C.

According to a preferred embodiment of the invention, the said resin composition is styrene-free, which means that there is no any styrene with the said component b) or with any other component of the resin composition.

More particularly, the said component b) may comprise, besides b1), at least one comonomer b2) selected from mono(meth)acrylates or di(meth)acrylates of oligoether diols, the said oligoether diols comprising from 2 to 4 alkoxy units, or (meth)acrylate of tetrahydrofurfuryl. Examples of the said comonomer b2) are : tetrahydrofurfuryl (meth)acrylate, methoxypolyethyleneglycol 350 mono(meth)acrylate, ethylene glycol dimethacrylate and diethyleneglycol di(meth)acrylate. The weight ratio of b2) with respect to the total weight of b1) + b2) may range from 0 to 50% preferably between 0 and 50% and more preferably from 0 to 30% even more preferably between 0 and 30%.

The said unsaturated polyester a) preferably has a degree of polymerisation (average number of ester units as calculated) varying from 2 to 6, and more preferably from 4 to 6. More preferably and particularly at least 50% by number of polyester chains have a degree of polymerisation from 4 to 6. It may correspond to a number average molecular weight Mn ranging from 400 to 900 preferably from 500 to 900.

The unsaturated polyester a) may have a bulk viscosity at 25°C ranging from 15 000 to 40 000 mPa.s, preferably from 15 000 to 35 000 mPa.s, and more preferably from 15 000 to 30 000 mPa.s.

The acid number of the said polyester a) may range up to 40 mg KOH/g, preferably up to 30 mg KOH/g, and more preferably from 10 to 30 mg KOH/g (measured on the resin in bulk).

The polymer content of the resin composition according to the invention may vary from 60 to 99,5 preferably from 60 to 95% and more preferably from 75 to 95% and being the complementary (up to 100%) of the comonomeric component b).

The α,β-ethylenically unsaturated polyester a) according to the invention can be obtained as the reaction product of :
i) at least an acidic component comprising at least one α,β-ethylenically unsaturated dicarboxylic acid and/or anhydride,
ii) an alcoholic component comprising :
   ii) c) at least one diol having 2 to 8 carbon atoms,
   ii) d) one monoalcohol component comprising :
      ii) d1) at least one monoalcohol bearing at least one allylic unsaturation, and
      ii) d2) at least one saturated aliphatic monoalcohol having 4 to 10 carbon atoms or one aromatic monoalcohol having 7 to 10 carbon atoms.

The acidic component i) may be selected from unsaturated acids and/or anhydrides such as fumaric, itaconic, maleic, norbornenedicarboxylic or tetrahydrophthalic and optionally from succinic, adipic, sebacic, phthalic, isophthalic, terephthalic, acids and/or anhydrides and mixture of these acids/anhydrides. Fumaric and maleic acids/anhydride are preferred. The isomerization rate of maleic anhydride during the polymerization process ranges between 50 and 95% depending on the diol nature. Acidic component i) comprises at least 80% expressed in carboxy equivalents of the total of i) of at least one alpha-beta ethylenically unsaturated carboxylic anhydride and/or acid, such as maleic or itaconic anhydrides and fumaric or itaconic acids, with less than 20% of a saturated one, such as. The equivalent weight by ethylenic unsaturation of the said polyester a) may range from 250 to 350.

Suitable diols ii) c) may be ethylene glycol, diethylene glycol, triethylene glycol, propylene glycol and mixture of these diols. The preferred diols ii) c) are ethylene glycol and/or propylene glycol.

Suitable monoalcohols ii) d1) may be allylic alcohol, trimethylolpropane diallyl ether, glycerol diallyl ether, pentaerythritol triallyl ether or mixtures of these alcohols, and the said saturated aliphatic or aromatic monoalcohol ii) d2) may be selected from butanol, benzyl alcohol, cyclohexanol, n-hexanol, isooctanol, isododecanol or mixtures of these alcohols. Preferred monoalcohols ii) d1) are trimethylolpropane diallyl ether, and preferred monoalcohols ii) d2) are benzyl alcohol. The molar ratio of the said monoalcohols ii) d1) / ii) d2) may range from 0,8 to 1,5, and preferably from 0,9 to 1,2. Component ii) d1) may represent from 15 to 25% of the total OH equivalents of the whole alcoholic component ii). The equivalent ratio carboxyl groups/hydroxyl groups may vary up to 1/1, and preferably from 0,6/1 to 1/1.

The preparation process of the said unsaturated polyester resin composition according to the invention may comprise at least the following essential steps :
- synthesizing an α,β-ethylenically unsaturated polyester a) as defined according to the invention, preferably by bulk process, and
- diluting the α,β-ethylenically unsaturated polyester a) obtained during the first step in at least one comonomeric component b) up to the targeted solids content, to obtain the resin composition as defined according to the invention.

The second subject-matter of the invention concerns a curable coating or moulding composition comprising at least one resin composition as defined according to the invention, the said curable composition preferably being a sprayable coating composition. The said curable composition is preferably curable by radiation and/or by peroxide or thermal route, and more specifically by a curing process comprising at least one step of radiation and/or peroxide curing.

More particularly, the said coating composition may be a composition of protective coating and/or decorative coating and/or a surface treatment composition for wood and derivatives, imitating wood materials, metal or plastic substrates. Examples of coating compositions comprise paint, varnish, sealer or gel coat composition. Such coating compositions may further comprise, in addition to the said polyester and comonomers and initiator systems, up to 50% by weight of other components such as, pigments, stabilisers, thixotropic agents levelling additives, sanding aids, reaction promoters etc.

The present invention does also cover the use of the said resin composition in a radiation-curable or in a peroxide-curable coating or moulding composition, the said coating composition possibly being a paint, varnish, sealer or gel coat composition. The use of the said resin composition or of the said coating composition can be for the protection and/or decoration and/or surface treatment of substrates such as wood and derivatives, imitating wood materials, metal or plastic (including composites) substrates, more particularly in furniture and automotive applications. For such uses, the said coatings are preferably thick multilayer coatings with a total thickness from 100 to 2000 µm. Several layers could be applied one after the other, after gelification of the previous layer. The number of layers may vary from 1 to 10, and preferably from 2 to 6, with a thickness from 100 µm to 300 µm for each one.

More particular uses of the said coating compositions may be in sealers for wood finishing or in glossy protective or decorative coatings, and the said moulding compositions may be composites or laminate compositions. Examples of uses in composites are uses in BMC or SMC moulding compositions. A particular use in coating or composite is in clear or pigmented gel coat compositions.

They are also part of the invention a coating resulting from the cure of at least one coating, a moulded article, a composite or a laminate, resulting from the cure of a moulding composition as defined according to the present invention. The said coating as mentioned can be a multilayer coating with a thickness ranging from 100 to 2000 µm, and preferably ranging from 200 to 1000 µm. The said coating can be a cured paint, varnish or gel coat.

The said coating can be applied to a substrate by a process comprising at least the steps of :
a) spraying a coating composition, as defined above on the said substrate, which may be wood and derivatives, wood imitating materials, metal, plastic (including composites) substrates,
b) applying at least one coat, and preferably 2 to 6 coats, on the said substrate, to obtain a thickness from 100 to 2000 µm, and preferably from 200 to 1000 µm,
c) drying the coated substrate, and
d) optionally, polishing the surface after at least 24 hours.

The coated substrate is also part of the present invention, comprising at least one layer of a cured coating, resulting from a coating composition according to the invention. The said substrate can be wood and derivatives, imitating wood materials, metal or plastic, and more particularly for plastics it may be a composite substrate coated with a gel coat.

A more specific use of the coating composition of the present invention relates to automobile interior body parts for decorative purpose, coated with at least one coating composition according to the invention.

By way of illustration of the invention, the following examples demonstrate, without any limitation, the performances of the resin compositions and coatings as obtained, according to the claimed invention.

### I/ Starting materials

### a) Starting materials for the resin compositions

**Table 1**

| **Component** | **Commercial reference** | **Supplier** |
|---|---|---|
| Fumaric acid | - | Arkema |
| Itaconic acid | - | Iwata Chemical |
| Tetrahydrophthalic anhydride | - | Lonza |
| Trimethylolpropane | - | Perstop |
| Ethylene glycol | - | Ineos |
| Propylene glycol | - | Lyondell |
| Triethylene glycol | - | IQA |
| Trimethylolpropane diallyl ether | ° TMPDE 80 | Perstop |
| Benzyl alcohol | - | Brenntag |
| Isobornyl methacrylate | SR423A | Sartomer |
| 1,4-butanediol dimethacrylate | SR-214 | Sartomer |

### b) Starting materials for the coating formulations

**Table 2**

| **Component** | **Commercial reference** | **Supplier** |
|---|---|---|
| Borchi Gol Lac 80 | - | Borchers |
| Ethyl acetate | - | BP |
| Co octoate at 6% | Co 6 Hex-Cem | OMG |
| Methyl Ethyl Ketone Peroxide | Peroxan ME 50 L | Pergam |

### II/ Preparation of the unsaturated polyesters

### Preparation in bulk.

### Example 1 :

In a glass reactor, equipped with a condenser, a stirrer, a temperature control system and an inlet for nitrogen, the starting components (see Table 3) and 70 ppm of the inhibitor (THQ) are added together. Then, the mixture is heated at a temperature of 160-170°C.

A strong stream of nitrogen (flow rate between 5 and 10 m³/h) is applied when the acid value drops very slowly to help the water stripping at the end of the polycondensation reaction.

The reaction mixture is maintained at 160-170°C with a strong bubbling of nitrogen, until the targeted acid values and viscosities are reached.

### Examples 2 to 7 :

The same procedure as described in example 1 is followed, with the quantities of Table 3.

The comparative example 6 is realized according to the procedure of example 2 of US 5,470,897.

**Table 3**

| | | **Ex. 1** | **Ex. 2** | **Ex. 3** | **Ex. 4** | **Ex. 5** **(comp.)** | **Ex. 6** **(comp.)** | **Ex. 7** |
|---|---|---|---|---|---|---|---|---|
| Fumaric acid | molar* | 0,75 | 1,00 | 1,00 | 1,00 | 0,50 | 1,00 | 1,00 |
| | weight | 740 g | 1000 g | 1000 g | 1000 g | 950 g | 1600 g | 1900 g |
| Itaconic acid | molar* | | | | | 0,50 | | |
| | weight | | | | | 1070 g | | |
| Tetrahydrophthalic | molar* | 0,25 | | | | | | |
| anhydride | weight | 324 g | | | | | | |
| Trimethylolpropane | molar | 0,22 | 0,22 | 0,65 | | | | |
| | weight | 250 g | 250 g | 750 g | | | | |
| Ethylene glycol | molar | | | | 0,30 | 0,30 | 0,60 | 0,30 |
| | weight | | | | 161 g | 306 g | 513 g | 306 g |
| Propylene glycol | molar | | | | 0,35 | 0,35 | 0,60 | 0,35 |
| | weight | | | | 230 g | 437 g | 629 g | 437 g |
| Triethylene glycol | molar | 0,22 | 0,22 | | | | | |
| | weight | 280 g | 280 g | | | | | |
| Trimethylolpropane | molar | 0,56 | 0,56 | 0,60 | 0,60 | 0,60 | 0,50 | 0,43 |
| diallyl ether | weight | 1020 g | 1020 g | 1150 g | 1150 g | 1520 g | 1476 g | 1520 g |
| Benzyl alcohol | molar | 0,65 | 0,65 | 0,40 | 0,40 | 0,40 | 0,50 | 0,40 |
| | weight | 598 g | 598 g | 370 g | 370 g | 703 g | 745 g | 703 g |

| | | | | | | | | |
|---|---|---|---|---|---|---|---|---|
| * molar proportion for 1 mole of global diacid. | | | | | | | | |

### III/ Characterization of the unsaturated polyesters

### • Acid number

Evaluation according to Standard ISO 3682.

### • Viscosity

Evaluation according to Standard ISO 3219.

### • Gardner colour

Evaluation according to Standard ISO 4630.

### • Tg

Measured by DSC method at a heating rate of 10°C/min.

### IV/ Characteristics of the unsaturated polyesters

**Table 4**

| | **Ex. 1** | **Ex. 2** | **Ex. 3** | **Ex. 4** | **Ex. 5** **(comp.)** | **Ex. 6** **(comp.)** | **Ex. 7** |
|---|---|---|---|---|---|---|---|
| Acid number (mg KOH/g) | 27 | 26 | 20 | 27 | 30,5 | 39 | 25 |
| Viscosity (mPa.s) | 15000 | 17000 | 30000 | 17000 | 6200 | 275 | 21000 |
| Gardner colour | 1,3 | 1,5 | 0,7 | 0,7 | 4,4 | 1,0 | 1,0 |
| Tg (°C) | | | | | | | -6 |

### V/ Preparation of the resin compositions based on the above-cited unsaturated polyesters

### General procedure for the preparation of the resin compositions :

The resins compositions of the present invention consist of the dilution of the said unsaturated polyesters with the said monomeric (meth)acrylates, carried out in the same reactor of the polymerization process or in a blender, keeping the temperature of the blend lower than 65°C during the blending operation.

**Table 5 : Resin compositions**

| | **Ex. 8** | **Ex. 9** **(comp.)** | **Ex. 10** | **Ex.11** **(comp.)** |
|---|---|---|---|---|
| Unsaturated polyester resin according to example 7 | 100,00 | 100,00 | 100,00 | 100,00 |
| Isobomyl methacrylate SR423A | 10,00 | | 20,00 | |
| 1,4-butanediol dimethacrylate SR-214 | | 10,00 | | 20,00 |
| **Total :** | **110,00** | **110,00** | **120,00** | **120,00** |

### VI/ Performances of the resin compositions

Coatings based on the resin compositions of the present invention as well as on the comparative examples were prepared according to the formulations included in Table 7. The following properties were evaluated :

### • Gel time

A 50 g sample of the coating based on the resin composition material and the corresponding Cobalt octoate indicated in the table are placed in a disposable reaction vessel, maintained at 20°C and mixed with a stirring rod for 1 minute. Then, the indicated weight of methylethylketone peroxide catalyst (60% in dibutylphthalate solution) is added to the blend and the mass is stirred for 15 seconds, and then allowed to stand undisturbed in the reaction vessel until the gel point is reached. The gel point is that point in the curing time at which the blend becomes rubbery and snaps from the stirring rod when the rod is lifted out of the blend mass.

### • Viscosity

The viscosity of the coating based on the resin composition was measured by the Ford Cup viscosity method. A standardized Ford cup fitted with a #4 orifice was employed. The Ford cup viscosity is the time (in seconds) required for 100 mL of a sample at a temperature of 20°C to flow through the orifice.

### • Persoz hardness

The coating compositions in Table 7 were evaluated by measuring Persoz hardness in accordance with ISO 1522. The various examples in Table 5 were applied over a glass panel using a 100 µm doctor blade to get a dry film thickness of about 70 µm. The film hardness was measured after 24 hours using a Persoz hardness tester.

### • Gloss

Gloss was measured using a BYK-Gardner Micro-Tri-Gloss apparatus at geometry of 60° according to ASTM-D-523-89, Standard Test Method For Specular Gloss. The apparatus is calibrated with a polished glass surface.

### • Spray application on sapelly veneer

The coating compositions in Table 7 were applied by spray on wood panels (20 x 25 cm) consisting of particle board with sapelly veneer glued on its surface (6 x 150 g/m²). The different coats were applied with intermediate drying of 15 minutes to allow the evaporation of the volatile solvent.

### • Cold check resistance

The temperature change resistance of the coating films applied on wood was measured following the Standard test method ASTM D 1211-60.

Cold check test (Cycles to Failure) : every cycle consists of :
■ 1 hour at 50°C,
■ Ramp of ½ hour from 50°C to - 20°C,
■ 1 hour at - 20°C,
■ Ramp of ½ hour from - 20°C to 50°C,

### • Scratch resistance. Nail scratching Method

Three testers placed their hands on the surface of the films of the coatings such that the back side of the hand was in contact with the surface thereof. The fingers were moved forward and backward 10 times with the back of each hand fixed, to scratch the coating film with nails. Then, the degree of scratches formed was examined and rated according to the following criterion :

**Table 6 :**

| | |
|---|---|
| **1** | Surface breakage or whitening |
| **2** | Scratches are very visible |
| **3** | Scratches are clearly visible |
| **4** | Slightly scratched surface (hardly visible) |
| **5** | No scratches |

**Table 7 : Coating formulations based on the resin compositions of Table 5**

| Resin composition used | **Ex. 8** | **Ex. 9** **(comp)** | **Ex. 10** | **Ex. 11** **(comp)** |
|---|---|---|---|---|
| Resin composition amount | 110,00 g | 110,00 g | 120,00 g | 120,00 g |
| Borchi Gol Lac 80 (10% in ethyl acetate) | 0,40 g | 0,40 g | 0,40 g | 0,40 g |
| Ethyl acetate | 10,00 g | 10,00 g | 10,00 g | 10,00 g |

| **Curing additives :** | | | | |
|---|---|---|---|---|
| Co octoate at 6% (on resin composition) | 2% | 2% | 2% | 2% |
| MEKP (on resin composition) | 3% | 3% | 3% | 3% |
| Gel time (minutes) | 55 | 25 | 50 | 21 |

| **Viscosity adjustment for spray application :** | | | | |
|---|---|---|---|---|
| Ethyl acetate | 15% | 13% | 12% | 10% |
| Viscosity Ford cup 4 at 20°C | 25" | 25" | 24" | 25" |
| Persoz hardness 24h (100 wet microns) | 212" | nd | 228" | 226" |

| **Spray application on sapelly veneer : 6** x **150 g/m²** | | | | |
|---|---|---|---|---|
| Surface drying after 2 h at 20°C (absence of tack) | OK | OK | OK | OK |
| Gloss at 60° | 92,0 | 92,0 | 94,0 | 94,0 |
| Cold check (30 cycles) | OK | cracks | OK | cracks |
| Scratch resistance | 4 | 3 | 4-5 | 3-4 |

## Claims

1. Resin composition **characterized in that** it comprises :
a) at least one α,β-ethylenically unsaturated polyester, liquid at room temperature, and
b) at least one comonomeric component comprising :
b1) at least one comonomer selected from (meth)acrylates of cycloaliphatic alcohols, and
b2) optionally, at least one comonomer different from b1), at a weight ratio of said component b2) with respect to the total weight b1) + b2), ranging from 0 to 50%
and **in that** the weight content of the said comonomer b) with respect to the total weight of a) + b) ranges from 0,5 to 45%, preferably from 5 to 40%, and more preferably from 5 to 25%, and wherein the said unsaturated polyester a) has a bulk viscosity at 25°C, measured according to Standard ISO 3219, ranging from 15 000 to 40 000 mPa.s and a Tg measured by DSC method lower than 10°C, at a heating rate of 10°C/min, and wherein the said resin composition is styrene-free.

2. Resin composition as defined according to claim 1, wherein the said (meth)acrylate of cycloaliphatic alcohol comprises a cycloaliphatic structure selected from isobornyl, dicyclopentadienyl or cyclohexyl.

3. Resin composition as defined according to claims 1 to 2, wherein the said resin composition consists of components a) and b).

4. Resin composition as defined according to claims 1 to 3, wherein the said component b) comprises, besides b1), at least one comonomer b2) selected from mono(meth)acrylates or di(meth)acrylates of oligoether diols, the said oligoether diols comprising from 2 to 4 alkoxy units, or (meth)acrylate of tertrahydrofurfuryl.

5. Resin composition as defined according to claims 1 to 4, wherein the said unsaturated polyester a) has a number average molecular weight Mn ranging from 400 to 900.

6. Resin composition as defined according to claims 1 to 5, wherein the said unsaturated polyester a) is the reaction product of :
i) at least an acidic component comprising at least one α,β-ethylenically unsaturated dicarboxylic acid and/or anhydride,
ii) an alcoholic component comprising :
ii) c) at least one diol having 2 to 8 carbon atoms,
ii) d) one monoalcohol component comprising :
ii) d1) at least one monoalcohol bearing at least one allylic unsaturation, and
ii) d2) at least one saturated aliphatic monoalcohol having 4 to 10 carbon atoms or one aromatic monoalcohol having 7 to 10 carbon atoms.

7. Resin composition as defined according to claim 6, wherein the said monoalcohol ii) d1) is selected from allylic alcohol, trimethylolpropane diallyl ether, glycerol diallyl ether, pentaerythritol triallyl ether or mixtures of these alcohols, and the said saturated aliphatic or aromatic monoalcohol ii) d2) is selected from butanol, benzyl alcohol, cyclohexanol, n-hexanol, isooctanol, isododecanol or mixtures of these alcohols.

8. Resin composition as defined according to claim 6 or 7, wherein the molar ratio ii) d1) / ii) d2) ranges from 0,8 to 1,5, and preferably from 0,9 to 1,2.

9. Resin composition as defined according to claims 6 to 8, wherein the said component ii) d1) represents from 15 to 25% of the total OH equivalents of the whole alcoholic component ii).

10. Curable coating or moulding composition **characterized in that** it comprises at least one resin composition as defined according to claims 1 to 9.

11. Coating composition as defined according to claim 10, wherein the said coating composition is a composition of protective coating and/or decorative coating and/or surface treatment for wood and derivatives, imitating wood materials, metal or plastic substrates.

12. Coating composition as defined according to claims 10 or 11, wherein the said coating composition is a paint, varnish, sealer or gel coat composition.

13. Coating or moulding composition as defined according to claims 10 to 12, wherein the said composition is a sprayable composition.

14. Coating or moulding composition as defined according to claims 10 to 13, wherein the said composition is curable by radiation and/or by peroxide or thermal route.

15. Coating, moulded article, composite or laminate, **characterized in that** it results from the cure of at least one composition as defined according to claims 10 to 14.

16. Coating as defined according to claim 15, wherein the said coating is a multilayer coating with a thickness ranging from 100 to 2000 µm.

17. Coated substrate **characterized in that** it comprises at least one layer of a cured coating, resulting from a coating composition as defined according to claims 10 to 14.

18. Coated substrate as defined according to claim 17, wherein the said substrate is wood and derivatives, imitating wood materials, metal or plastic.

19. Automobile interior body part for decorative purpose **characterized in that** it is coated with at least one coating composition as defined according to claims 10 to 14.

## Patentansprüche

1. Harzzusammensetzung, **dadurch gekennzeichnet, dass** sie:
a) mindestens einen α,β-ethylenisch ungesättigten Polyester, der bei Raumtemperatur flüssig ist, und
b) mindestens eine Comonomerkomponente, umfassend
b1) mindestens ein Comonomer, das unter (Meth)acrylaten von cycloaliphatischen Alkoholen ausgewählt ist, und
b2) gegebenenfalls mindestens ein von b1) verschiedenes Comonomer in einem Gewichtsverhältnis von Komponente b2), bezogen auf das Gesamtgewicht b1) + b2), im Bereich von 0 bis 50%,
umfasst und dass der Gewichtsgehalt des Comonomers b), bezogen auf das Gesamtgewicht von a) + b) im Bereich von 0,5 bis 45%, vorzugsweise von 5 bis 40% und weiter bevorzugt von 5 bis 25% liegt, und wobei der ungesättigte Polyester a) eine gemäß ISO-Norm 3219 gemessene Volumenviskosität bei 25°C im Bereich von 15.000 bis 40.000 mPa.s und eine nach der DSC-Methode gemessene Tg von weniger als 10°C bei einer Aufheizrate von 10°C/min aufweist und die Harzzusammensetzung styrolfrei ist.

2. Harzzusammensetzung nach Anspruch 1, wobei das (Meth)acrylat von cycloaliphatischem Alkohol eine cycloaliphatische Struktur, die unter Isobornyl, Dicyclopentadienyl oder Cyclohexyl ausgewählt ist, umfasst.

3. Harzzusammensetzung nach den Ansprüchen 1 bis 2, wobei die Harzzusammensetzung aus den Komponenten a) und b) besteht.

4. Harzzusammensetzung nach den Ansprüchen 1 bis 3, wobei die Komponente b) neben b1) mindestens ein Comonomer b2), das unter Mono(meth)acrylaten oder Di(meth)acrylaten von Oligoetherdiolen, wobei die Oligoetherdiole 2 bis 4 Alkoxyeinheiten umfassen, oder (Meth)acrylat von Tetrahydrofurfuryl ausgewählt ist, umfasst.

5. Harzzusammensetzung nach den Ansprüchen 1 bis 4, wobei der ungesättigte Polyester a) ein zahlenmittleres Molekulargewicht Mn im Bereich von 400 bis 900 aufweist.

6. Harzzusammensetzung nach den Ansprüchen 1 bis 5, wobei es sich bei dem ungesättigten Polyester a) um das Reaktionsprodukt von:
i) mindestens einer Säurekomponente, die mindestens eine α,β-ethylenisch ungesättigte Dicarbonsäure und/oder ein α,β-ethylenisch ungesättigtes Dicarbonsäureanhydrid umfasst,
ii) einer Alkoholkomponente, umfassend:
ii) c) mindestens ein Diol mit 2 bis 8 Kohlenstoffatomen,
ii) d) eine Monoalkoholkomponente, umfassend:
ii) d1) mindestens einen Monoalkohol mit mindestens einer allylischen Ungesättigtheit und
ii) d2) mindestens einen gesättigten aliphatischen Monoalkohol mit 4 bis 10 Kohlenstoffatomen oder einen aromatischen Monoalkohol mit 7 bis 10 Kohlenstoffatomen,
handelt.

7. Harzzusammensetzung nach Anspruch 6, wobei der Monoalkohol ii) d1) unter Allylalkohol, Trimethylolpropandiallylether, Glycerindiallylether, Pentaerythrittriallylether oder Mischungen dieser Alkohole ausgewählt ist und der gesättigte aliphatische oder aromatische Monoalkohol ii) d2) unter Butanol, Benzylalkohol, Cyclohexanol, n-Hexanol, Isooctanol, Isododecanol oder Mischungen dieser Alkohole ausgewählt ist.

8. Harzzusammensetzung nach Anspruch 6 oder 7, wobei das Molverhältnis ii) d1) / ii) d2) im Bereich von 0,8 bis 1,5 und vorzugsweise von 0,9 bis 1,2 liegt.

9. Harzzusammensetzung nach den Ansprüchen 6 bis 8, wobei die Komponente ii) d1) 15 bis 25% der gesamten OH-Äquivalente der gesamten Alkoholkomponente ii) ausmacht.

10. Härtbare Beschichtungs- oder Formzusammensetzung, **dadurch gekennzeichnet, dass** sie mindestens eine Harzzusammensetzung gemäß den Ansprüchen 1 bis 9 umfasst.

11. Beschichtungszusammensetzung nach Anspruch 10, bei der es sich um eine Zusammensetzung zur Schutzbeschichtung und/oder dekorativen Beschichtung und/oder Oberflächenbehandlung für Holz und Derivate, Holzimitationsmaterialien, Metall- oder Kunststoffsubstrate handelt.

12. Beschichtungszusammensetzung nach Anspruch 10 oder 11, bei der es sich um eine Lack-, Klarlack-, Versiegelungsmittel- oder Gelcoatzusammensetzung handelt.

13. Beschichtungs- oder Formzusammensetzung nach den Ansprüchen 10 bis 12, bei der es sich um eine spritzbare Zusammensetzung handelt.

14. Beschichtungs- oder Formzusammensetzung nach den Ansprüchen 10 bis 13, wobei die Zusammensetzung durch Strahlung und/oder durch Peroxid oder auf thermischem Wege härtbar ist.

15. Beschichtung, Formkörper, Komposit oder Laminat, **dadurch gekennzeichnet, dass** sie bzw. er bzw. es aus der Härtung mindestens einer Zusammensetzung gemäß den Ansprüchen 10 bis 14 resultiert.

16. Beschichtung nach Anspruch 15, bei der es sich um eine mehrschichtige Beschichtung mit einer Dicke im Bereich von 100 bis 2000 µm handelt.

17. Beschichtetes Substrat, **dadurch gekennzeichnet, dass** es mindestens eine Schicht einer gehärteten Beschichtung, die aus einer Beschichtungszusammensetzung gemäß den Ansprüchen 10 bis 14 resultiert, umfasst.

18. Beschichtetes Substrat nach Anspruch 17, wobei es sich bei dem Substrat um Holz und Derivate, Holzimitationsmaterialien, Metall oder Kunststoff handelt.

19. Kraftfahrzeug-Innenausstattungsteil für dekorative Zwecke, **dadurch gekennzeichnet, dass** es mit mindestens einer Beschichtungszusammensetzung gemäß den Ansprüchen 10 bis 14 beschichtet ist.

## Revendications

1. Composition de résine **caractérisée en ce qu'**elle comprend :
a) au moins un polyester à insaturation α,β-éthylénique, liquide à température ambiante, et
b) au moins un composant comonomère comprenant :
b1) au moins un comonomère choisi parmi les (méth)acrylates d'alcools cycloaliphatiques et
b2) facultativement, au moins un comonomère différent de b1), en une proportion en poids dudit composant b2) par rapport au poids total de b1) + b2) allant de 0 à 50 %,
et **en ce que** la teneur en poids dudit comonomère b) par rapport au poids total de a) + b) va de 0,5 à 45 %, de préférence de 5 à 40 % et de préférence encore de 5 à 25 %, et dans laquelle ledit polyester insaturé a) a une viscosité apparente à 25 °C, mesurée selon la norme ISO 3219, allant de 15 000 à 40 000 mPa.s et une Tg mesurée par la méthode de DSC inférieure à 10 °C, à une vitesse de chauffage de 10 °C/min, et ladite composition de résine étant exempte de styrène.

2. Composition de résine telle que définie selon la revendication 1, dans laquelle ledit (méth)acrylate d'alcool cycloaliphatique comprend une structure cycloaliphatique choisie parmi la structure isobornyle, dicyclopentadiényle ou cyclohexyle.

3. Composition de résine telle que définie selon les revendications 1 à 2, ladite composition de résine étant constituée de composants a) et b).

4. Composition de résine telle que définie selon les revendications 1 à 3, dans laquelle ledit composant b) comprend, outre b1), au moins un comonomère b2) choisi parmi les mono (méth) acrylates ou di(méth)acrylates de diols d'oligoéthers, lesdits diols d'oligoéthers comprenant de 2 à 4 motifs alcoxy, ou le (méth)acrylate de tétrahydrofurfuryle.

5. Composition de résine telle que définie selon les revendications 1 à 4, dans laquelle ledit polyester insaturé a) a une masse moléculaire moyenne en nombre Mn allant de 400 à 900.

6. Composition de résine telle que définie selon les revendications 1 à 5, dans laquelle ledit polyester insaturé a) est le produit réactionnel de :
i) au moins un composant acide comprenant au moins un acide et/ou anhydride dicarboxylique à insaturation α,β-éthylénique,
ii) un composant alcoolique comprenant :
ii) c) au moins un diol ayant 2 à 8 atomes de carbone,
ii) d) un composant monoalcool comprenant :
ii d1) au moins un monoalcool portant au moins une insaturation allylique et
ii) d2) au moins un monoalcool aliphatique saturé ayant 4 à 10 atomes de carbone ou un monoalcool aromatique ayant 7 à 10 atomes de carbone.

7. Composition de résine telle que définie selon la revendication 6, dans laquelle ledit monoalcool ii) d1) est choisi parmi l'alcool allylique, l'éther diallylique du triméthylolpropane, l'éther diallylique du glycérol, l'éther triallylique du pentaérythritol ou les mélanges de ces alcools et ledit monoalcool aliphatique saturé ou aromatique ii) d2) est choisi parmi le butanol, l'alcool benzylique, le cyclohexanol, le n-hexanol, l'isooctanol, l'isododécanol ou les mélanges de ces alcools.

8. Composition de résine telle que définie selon la revendication 6 ou 7, dans laquelle le rapport molaire ii) d1)/ii) d2) va de 0,8 à 1,5, et de préférence de 0, 9 à 1,2.

9. Composition de résine telle que définie selon les revendications 6 à 8, dans laquelle ledit composant ii) d1) représente de 15 à 25 % des équivalents OH totaux du composant alcoolique ii) total.

10. Composition de revêtement ou de moulage durcissable **caractérisée en ce qu'**elle comprend au moins une composition de résine telle que définie selon les revendications 1 à 9.

11. Composition de revêtement telle que définie selon la revendication 10, ladite composition de revêtement étant une composition de revêtement protecteur et/ou de revêtement décoratif et/ou de traitement de surface pour du bois et des dérivés, des matériaux en bois d'imitation, des substrats en métal ou en plastique.

12. Composition de revêtement telle que définie selon les revendications 10 ou 11, ladite composition de revêtement étant une composition de peinture, de vernis, de peinture pour couche d'impression ou d'enduit gélifié.

13. Composition de revêtement ou de moulage telle que définie selon les revendications 10 à 12, ladite composition étant une composition pouvant être pulvérisée.

14. Composition de revêtement ou de moulage telle que définie selon les revendications 10 à 13, ladite composition étant durcissable par rayonnement et/ou par voie aux peroxydes ou thermique.

15. Revêtement, article moulé, composite ou stratifié, **caractérisé en ce qu'**il résulte du durcissement d'au moins une composition telle que définie selon les revendications 10 à 14.

16. Revêtement tel que défini selon la revendication 15, ledit revêtement étant un revêtement multicouche ayant une épaisseur allant de 100 à 2 000 µm.

17. Substrat revêtu **caractérisé en ce qu'**il comprend au moins une couche d'un revêtement durci, résultant d'une composition de revêtement telle que définie selon les revendications 10 à 14.

18. Substrat revêtu tel que défini selon la revendication 17, ledit substrat étant du bois et des dérivés, des matériaux en bois d'imitation, du métal ou du plastique.

19. Pièce de carrosserie d'intérieur d'automobile à but décoratif **caractérisée en ce qu'**elle est revêtue d'au moins une composition de revêtement telle que définie selon les revendications 10 à 14.
